(19) Europäisches Patentamt / European Patent Office / Office européen des brevets

(11) **EP 2 891 907 A1**

(12) **EUROPEAN PATENT APPLICATION**
published in accordance with Art. 153(4) EPC

(43) Date of publication:
**08.07.2015 Bulletin 2015/28**

(21) Application number: **13833639.1**

(22) Date of filing: **02.09.2013**

(51) Int Cl.:
*G02B 1/11* (2015.01)          *B32B 7/02* (2006.01)
*B32B 9/00* (2006.01)

(86) International application number:
**PCT/JP2013/073589**

(87) International publication number:
**WO 2014/034938 (06.03.2014 Gazette 2014/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.08.2012 JP 2012191538**

(71) Applicant: **HOYA LENS MANUFACTURING PHILIPPINES INC.**
**Cavite (PH)**

(72) Inventors:
• **HOSHINO, Yuta**
  **Tokyo 161-8525 (JP)**
• **KUTSUKAKE, Yusuke**
  **Tokyo 161-8525 (JP)**
• **SUGIHARA, Yosuke**
  **Tokyo 161-8525 (JP)**

(74) Representative: **Beckmann, Claus**
**Kraus & Weisert**
**Patentanwälte PartGmbB**
**Thomas-Wimmer-Ring 15**
**80539 München (DE)**

(54) **OPTICAL ARTICLE PROVIDED WITH HIGH-STRENGTH HARD COAT LAYER**

(57)     One aspect of the present invention relates to an optical article comprising:
an optical substrate;
a hard coat layer provided directly, or over another layer (s), on the optical substrate;
an antireflective layer provided on the hard coat layer; and
an antifouling layer provided on the antireflective layer;
such that when a friction and wear test is conducted on the surface of the antifouling layer under conditions of a scratching rate of 0.1 mm/s and a load increase rate of 0.15 gf/s with a diamond stylus having a tip diameter of 0.03 mm, the load at which the antireflective layer begins to peel off is greater than 50 gf.

EP 2 891 907 A1

**Description**

CROSS-REFERENCE TO RELATED APPLICATIONS

This application claims benefit of priority to Japanese Patent Application No. 2012-191538 filed on August 31, 2012, which is expressly incorporated herein by reference in its entirety.

TECHNICAL FIELD

The present invention relates to an optical article.

BACKGROUND ART

There are optical articles, such as eyeglass lenses, in which a hard coat layer is provided on the surface of an optical substrate, such as a lens substrate, an antireflective layer is provided over the hard coat layer, and an antifouling layer and the like is provided over the antireflective layer.
Of the various layers that are provided on an optical article, the hard coat layer is provided primarily to enhance resistance to scratching. Optical articles, eyeglass lenses in particular, are sometimes subjected to scratch tests to determine whether they meet the required scratch resistance property (see Japanese Unexamined Patent Publication (KOKAI) No. 2007-248998, the entire contents of which are hereby incorporated by reference).
In the conventional scratch test, steel wool is employed to rub the eyeglass lens from above the coatings. The presence or absence of scratches that are produced on the surface is visually evaluated (this test is called as the steel wool test). More specifically, in above-cited Japanese Unexamined Patent Publication (KOKAI) No. 2007-248998, a load is applied to an eyeglass lens with steel wool, 10 rubbing passes back and forth are made over the surface of the eyeglass lens, and the degree to which scratches form is visually evaluated. The evaluation scale consists of no scratches at all observed over the rubbed area, a prescribed number of scratches observed over the area, and countless scratches observed over the area, or the like.
However, the present inventors thought that evaluation results obtained by the conventional scratch tests such as the steel wool test were hard to be recognized that they correlate with the various scratches produced on optical articles, particularly eyeglass lenses. They thought that scratches were produced for various reasons following shipment even on eyeglass lenses that had been shipped after being evaluated as good products based on conventional scratch tests. Were it possible to ship optical articles having high scratch resistance to such scratches, that is, products in the form of optical articles having extremely good durability, it would be possible to enhance the reliability of products.
One aspect of the present invention provides an optical article having good durability.
In a conventional scratch test, shallow scratches are formed by applying a relatively small amount of pressure to the optical article being tested. Thus, products that have shipped following a determination of passing based on this test tend not to develop shallow scratches following shipping. By contrast, the present inventors conducted extensive research into providing optical articles having good durability. In this process, they focused on the facts below: for example, when mounting eyeglass lenses in frames to fabricate eyeglasses, tools such as screwdrivers came into contact with the surface of the eyeglass lens, producing scratches; and scratches were formed by vigorous rubbing with cloth to which sand or debris had adhered against the eyeglass lens; and the forming of scratches by rubbing with considerable pressure in this manner could occur on optical articles after shipment. Further extensive research resulted in the establishment of a new evaluation method in which the scratch resistance of an optical article is evaluated based on the load at which film peeling-off began when a friction and wear test was conducted on the surface of an optical article under conditions of a scratching rate of 0.1 mm/s and a load increase rate of 0.15 gf/s using a diamond stylus with a tip diameter of 0.03 mm. Optical articles exhibiting evaluation results exceeding 50 gf in this new evaluation test as applied to optical articles sequentially having on an optical substrate a hard coat layer, an antireflective layer, and an antifouling layer were discovered to have high scratch resistance to scratches produced by high pressure such as scratches made by contact with screwdrivers. The present invention was devised on that basis.
One aspect of the present invention relates to an optical article comprising:

an optical substrate;
a hard coat layer provided directly, or over another layer(s), on the optical substrate;
an antireflective layer provided on the hard coat layer; and
an antifouling layer provided on the antireflective layer;
such that when a friction and wear test is conducted on the surface of the antifouling layer under conditions of a scratching rate of 0.1 mm/s and a load increase rate of 0.15 gf/s with a diamond stylus having a tip diameter of 0.03 mm, the load at which the antireflective layer begins to peel off is greater than 50 gf.

In this structure, when a friction and wear test is conducted on the antifouling layer under conditions of a scratch rate of 0.1 mm/s and a load increase rate of 0.15 gf/s (gf denotes gram weight, 0.15 ≒ 0.001471 N) with a diamond stylus having a tip diameter of 0.03 mm, the antireflective layer begins to peel off along with the antifouling layer when the load exceeds 50 gf (50 gf ≒ 0.490332 N). By having a value exceeding 50 gf for the load at which the antireflective layer begins to peel off, an optical article will tend not to be scratched even at high pressure, and it is possible to achieve good scratch resistance in optical articles comprising antireflective layers. An optical article having such scratch resistance can be obtained by adjusting the composition of the curable composition used to form the hard coat layer and adjusting the thickness of the hard coat layer. The details of this adjustment will be described further below. Since the above friction and wear test that was discovered by the present inventors is not conventionally known, adjusting the composition to obtain an optical article in which the antireflective layer begins to separate at a load of greater than 50 gf in the friction and wear test and adjusting the thickness of the hard coat layer in addition to adjusting the composition have not conventionally been done. Accordingly, an optical article in which peeling-off of the antireflective layer began at a load exceeding 50 gf in the above friction and wear test did not previously exist. As will be demonstrated in embodiments described farther below, it is an optical article that exhibits good scratch resistance to various types of scratches and extremely good durability.

In one aspect, the optical article is an eyeglass lens.

In one aspect, the hard coat layer comprises a filler component selected from the group consisting of spherical inorganic oxide particles and chained inorganic oxide particles.

In one aspect, the content of the filler component in the hard coat layer falls with a range of from more than 20 mass% to less than 40 mass%.

In one aspect, the thickness of the hard coat layer is greater than 3.5 $\mu$m but equal to or smaller than 40 $\mu$m, equal to or greater than 9.0 $\mu$m but not greater than 40 $\mu$m, 9.0 $\mu$m but not greater than 40 $\mu$m, or 15.0 $\mu$m or greater but not greater than 40 $\mu$m.

In one aspect, the load at which the antireflective layer begins to peel off is 100 gf or greater, or 167 gf or greater.

Having a load at which the antireflective layer begins to peel off of 100 gf or greater makes it possible to further enhance the scratch resistance to great pressure in optical articles comprising an antireflective layer and an antifouling layer. Having such a load of 167 g or greater makes it possible to even further enhance the scratch resistance to great pressure.

Another aspect of the present invention relates to an optical article comprising:

> an optical substrate; and
> a hard coat layer provided directly, or over another layer(s), on the optical substrate;
> such that when the friction and wear test is conducted on the surface of the hard coat layer under conditions of a scratching rate of 0.1 mm/s and a load increase rate of 0.15 gf/s with a diamond stylus having a tip diameter of 0.03 mm, the load at which cutting powder appears is greater than 70 gf.

In one aspect, the optical article is as eyeglass lens.

In one aspect, the thickness of the hard coat layer is 6.0 $\mu$m or greater but not greater than 40 $\mu$m.

In the present invention and in the present *Description,* the term "friction and wear test" refers to a test in which a testing stylus is brought into contact with an optical article and displaced while increasing the load to examine the load at which scratches are imparted to the optical article. The greater the load at which scratches are imparted, the greater the resistance to scratching the optical article is evaluated as having. By employing a stylus and applying a weight, it is possible to reproduce the scratches that are made on optical articles by hard items and sharp items. By conducting the friction and wear test, it is possible to evaluate the scratch resistance of an optical article to high pressure. Normally, the friction and wear test is conducted using a commercial friction and wear tester. Here, the term "imparts scratches" means that when an antireflective layer is provided on an optical article, peel-off of the antireflective layer begins to occur and when an antireflective layer is not provided on an optical article, cutting powder begins to be produced. The phrase that some layer "peels off" means that a least a portion of the layer peels off. The term "cutting powder" means powder or fragments produced by the cutting of either the optical substrate or some layer contained on the optical article. Accordingly, the results of the friction and wear test are determined to indicate no scratching when no peeling-off of the antireflective layer or generation of cutting powder is visible even when grooves (pits) are formed on the surface of an optical article such as an eyeglass lens.

In the present invention and the present *Description,* the "thickness" of the hard coat layer means the greatest value of the thickness of the hard coat layer in a direction perpendicular to the tangent plane when the tangent plane of the optical substrate is assumed to be the region in which the friction and wear test has been (is being) conducted on the optical article. When the optical article is an eyeglass lens, when conducting a scratch test at a position passing through the geometric center of the eyeglass lens or around the center of the geometric center prior to processing the eyeglass lens to fit the shape of the frame of the eyeglass lens, the thickness of the hard coat layer in a direction parallel to the optical axis of the eyeglass lens and passing through the geometric center (the so-called center thickness) can also be adopted as the thickness.

[Brief Description of Drawings]

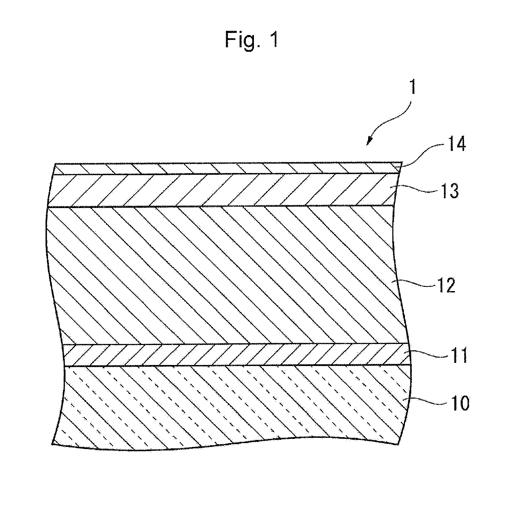

[Figure 1] A sectional view of main part of the eyeglass lens relating to a first implementation mode of the present invention.

[Figure 1] A sectional view of main part of the eyeglass lens relating to a second implementation mode of the present invention.

[Figure 3] A schematic drawing describing the method of measuring the sectional shape of an eyeglass lens in a friction and wear test.

[Figure 4] A drawing showing the sectional shape of the surface of the eyeglass lens when a load of 16 gf was applied with a diamond stylus in Embodiment 1.

[Figure 5] A drawing showing the sectional shape of the surface of the eyeglass lens when a load of 45 gf was applied with a diamond stylus in Embodiment 1.

[Figure 6] A drawing showing the sectional shape of the surface of the eyeglass lens when a load of 87 gf was applied with a diamond stylus in Embodiment 1.

[Figure 7] A drawing showing the sectional shape of the surface of the eyeglass lens when a load of 127 gf was applied with a diamond stylus in Embodiment 1.

[Figure 8] A drawing showing the sectional shape of the surface of the eyeglass lens when a load of 167 gf was applied with a diamond stylus in Embodiment 1.

[Figure 9] A drawing showing the sectional shape of the surface of the eyeglass lens when a load of 16 gf was applied with a diamond stylus in Comparative Example 1.

[Figure 10] A drawing showing the sectional shape of the surface of the eyeglass lens when a load of 26 gf was applied with a diamond stylus in Comparative Example 1.

[Figure 11] A drawing showing the sectional shape of the surface of the eyeglass lens when a load of 45 gf was applied with a diamond stylus in Comparative Example 1.

[Figure 12] Figure 12 is a schematic drawing showing how the chained sol disperses in the coating liquid.

[Figure 13] Figure 13 is a schematic drawing showing how the spherical sol disperses in the coating liquid.

[Figure 14] Figure 14 is a schematic drawing showing how the beaded sol and spherical sol disperse in the coating liquid.

Modes of implementing the present invention will be described based on the drawings. In the implementation modes presented below, a description will be given for the example of an optical article in the form of an eyeglass lens. However, the implementation modes described below are given by way of example. The present invention is not to be construed as being limited to these implementation modes.

Figure 1 shows a main part of the eyeglass lens relating to a first implementation mode of the present invention.

In Figure 1, eyeglass lens 1 is comprised of a lens substrate 10 (optical substrate) made of plastic, a primer layer 11 provided on the surface of lens substrate 10, a hard coat layer 12 provided on the surface of primer layer 11, an antireflective layer 13 provided on the surface of hard coat layer 12, and an antifouling layer 14 provided on the surface of antireflective layer 13. In the present implementation mode, it is possible to omit primer layer 11 and provide hard coat layer 12 on the surface of lens substrate 10. Figure 1 shows a mode in which primer layer 11, hard coat layer 12, antireflective layer 13, and antifouling layer 14 are present on one side of the lens substrate. However, it is possible for each of these layers to be laminated on both sides of the lens substrate (both the object side and the eye side surfaces). In that case, it suffices for the load at which the antireflective layer begins to peel off to exceed 50 gf when conducting the above friction and wear test on at least one side, and desirable for the load at which the antireflective layer begins to peel off to exceed 50 gf when the friction and wear test is conducted on both sides. Here, the phrase "the surface of the layer" means the surface of the layer on the side farthest from lens substrate 10. The phrase "the surface of lens substrate 10" means the concave or convex surface of the lens substrate. The phrase "the surface of eyeglass lens 1" means the surface of the layer farthest from lens substrate 10 among the layers formed on eyeglass lens 1. The expression "on" will sometimes be used with the same meaning as the expression "surface" hereinafter.

(The lens substrate)

The material of lens substrate 10 is not specifically limited. Examples are (meth)acrylic resins, styrene resins, carbonate resins, allyl resins, diethylene glycol bisallylcarbonate resins (CR-39), and other allylcarbonate resins, vinyl resins, polyester resins, polyether resins, urethane resins obtained by reacting an isocyanate compound and a hydroxy compound such as diethylene glycol, thiourethane resins obtained by reacting an isocyanate compound and a polythiol compound, and transparent resins obtained by curing a polymerizable composition containing a (thio)epoxy compound having one or more intramolecular disulfide bonds. Of these materials, thiourethane resins obtained by reacting an isocyanate compound and a polythiol compound and transparent resins obtained by curing a polymerizable composition containing a (thio)epoxy compound having one or more intramolecular disulfide bonds are desirable as lens substrates with high refractive indexes. Specific examples of thiourethane resins obtained by reacting an isocyanate compound and a polythiol compound are the lens substrate that is employed in the product named "Seiko Super Sovereign (SSV)" (made by Hoya Corporation, refractive index 1.67, "Super Sovereign" being a registered trademark) and the lens substrate that is employed in the product named "Seiko Super Luscious" (made by Hoya Corporation, refractive index 1.60, "Super Luscious" being a registered trademark). A specific example of a transparent resin obtained by curing a polymerizable composition containing a (thio)epoxy compound having at least one disulfide bond is the lens substrate employed in the product named "Seiko Prestige" (made by Hoya Corporation, refractive index 1.74, "Prestige" being a registered trademark).

(The primer layer)

Primer layer 11 is formed on the surface of lens substrate 10. That is, primer layer 11 is present between lens substrate 10 and hard coat layer 12 and enhances adhesion between the two. Since it also absorbs shock from the exterior, it has the property of enhancing the impact resistance of eyeglass lens 1.

Such a primer layer 11 is desirably formed using a coating composition comprising an organic resin polymer having polarity and metal oxide microparticles containing titanium oxide.

The organic resin polymer exhibits adhesion to both lens substrate 10 and hard coat layer 12. The metal oxide microparticles serve to enhance the crosslinking density of primer layer 11 as a filler, making it possible to enhance water resistance, weatherability and light fastness. The organic resin polymer employed can be any of various resins such as a polyester resin, polyurethane resin, epoxy resin, melamine resin, polyolefin resin, urethane acrylate resin, or epoxy acrylate resin. From the perspective of light fastness, the metal oxide microparticles containing titanium oxide are desirably of a complex type containing titanium oxide having a rutile crystalline structure.

When applying the primer coating composition (primer liquid), it is effective to subject the surface of lens substrate 10 in advance to an alkali treatment, acid treatment, surfactant treatment, inorganic or organic microparticle peelng-off /polishing treatment, or plasma treatment with the goal of enhancing adhesion between lens substrate 10 and primer layer 11. Primer layer 11 can be formed by coating/curing the primer liquid by an ink-jet method, dipping method, spin-coating method, spray-coating method, roll coating method, or flow-coating method, and then heating/drying it for several hours at a temperature of 40 to 200°C.

The thickness of primer layer 11 desirably falls within a range of 0.1 to 30 $\mu$m. When primer layer 11 is excessively thin, it cannot exhibit basic performance such as water resistance and impact resistance. Conversely, when excessively thick, surface smoothness is lost, optical distortion occurs, and a defective external appearance such as turbidity or cloudiness sometimes occurs. To enhance adhesion between lens substrate 10 and hard coat layer 12, 0.1 to 2 $\mu$m is preferred. The refractive index of primer layer 11 is desirably made close to the refractive index of lens substrate 10 to inhibit interference fringes. As needed, dyes, pigments, and other colorants, as well as photochromic compounds and the like can be added to primer layer 11.

(The hard coat layer)

The load at which the antireflective layer begins to peel off in the optical article relating to one aspect of the present invention exceeds 50 gf when the friction and wear test is conducted. The present inventors conducted extensive research, resulting in the discovery that to obtain an optical article in which the load at which peeling-off of the antireflective layer began exceeded 50 gf when conducting the friction and wear test, it was effective to adjust:

(1) the composition of the curable composition used to form the hard coat layer (also referred to the "hard coat liquid" hereinafter); and
(2) the thickness of the hard coat layer.

In (1) above, more specifically:

(1-1) the use of a filler component, specifically a so-called spherical sol or chained sol; and
(1-2) adjusting the type and blending ratio of the catalyst, specifically, the blending ratio of the catalyst for the curable composition, and adjusting the blending ratio of the catalysts when employing multiple types of catalysts, are desirable.

By adjusting these various conditions, it is possible to obtain an optical article in which the load at which the antireflective layer begins to peel off exceeds 50 gf when conducting the friction and wear test.

(1. The filler component)

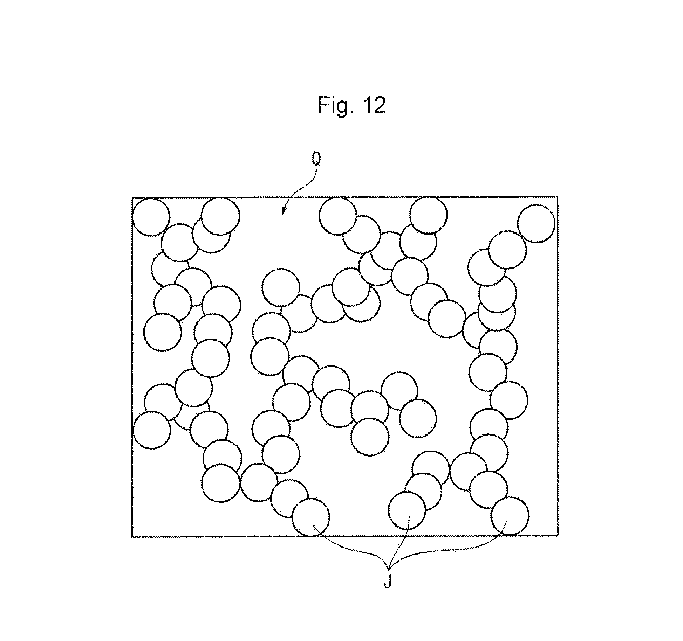

A filler component in the form of chained (beaded) inorganic oxide microparticles of linked primary particles (particles) (also referred to as a "beaded sol" hereinafter) can be incorporated into the hard coat layer. As shown in Figure 12, a chained (beaded) sol J is dispersed with a binder component in a coating liquid Q. Beaded sol J refers to a beaded (chained) sol in which several to several tens of spherical primary particles comprised of inorganic oxide are linked by chemical bonds into a beaded form (chained form). This can be in a linearly extending shape, or in a two-dimensionally or three-dimensionally curved shape. There can be branches in the intermediate portions. Thus, beaded sol J produces voids.

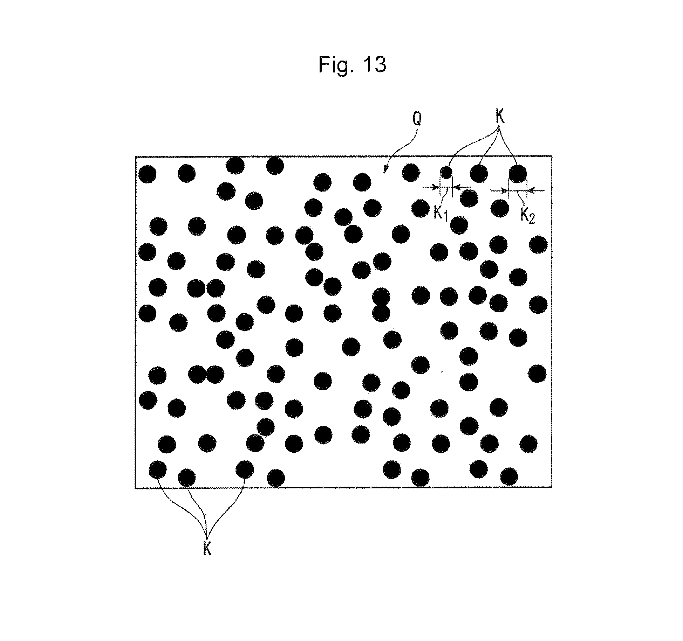

Spherical inorganic oxide microparticles (also referred to as a "spherical sol" hereinafter) can also be incorporated as a filler component. Figure 13 shows how the spherical sol is dispersed in the coating liquid. In Figure 13, the spherical sol K that is dispersed in coating liquid Q consists of spherical inorganic oxide microparticles. The sphericity of the spheres (the value of the shortest diameter $K_1$ of the particle divided by its longest diameter $K_2$: $K_1/K_2$) is desirably 0.8 or higher and preferably 0.9 or higher. The sphericity (arithmetic mean) can be obtained by observation under an electron microscope. In the case of a completely spherical shape, the sphericity is 1. Accordingly, the sphericity of the spherical sol is desirably 0.8 or higher and 1 or lower, preferably 0.9 or higher and 1 or lower.

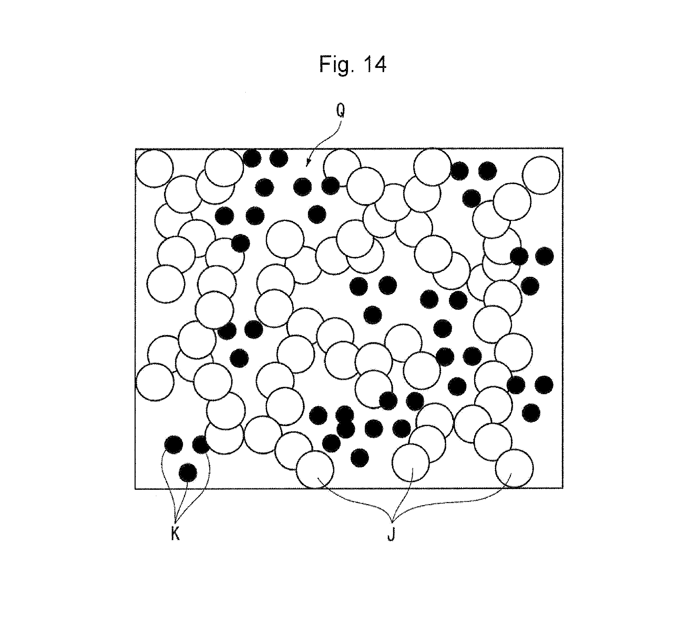

Figure 14 shows how a beaded sol and a spherical sol are dispersed in a coating liquid.

In a state where beaded sol J and spherical sol K are dispersed in a coating liquid Q, the structure is one in which spherical sol K enters into voids in beaded sol J.

Even once a hard coat layer has been formed, the individual microparticles remain dispersed in the hard coat layer.

The content of filler component in the hard coat layer (the total content when two or more components are incorporated) desirably falls within a range of greater than 20 mass% to less than 40 mass%. When employing chained inorganic oxide particles, the content of chained inorganic oxide microparticles in the hard coat layer is desirably 15 mass% or more, preferably 35 mass% or less, and preferably 30 mass% or less.

(1.1 The beaded sol)

The inorganic oxide constituting beaded sol J is not specifically limited. Examples are: silicon oxide ($SiO_2$), titanium oxide ($TiO_2$), aluminum oxide ($Al_2O_3$), tin oxide ($SnO_2$), calcium carbonate ($CaCO_3$), barium sulfate ($BaSO_4$), and calcium sulfate ($CaSO_4$). Of these inorganic oxides, silicon oxide is desirably employed. In the case of a beaded sol comprised of silicon oxide, the individual primary particles could conceivably be linked by siloxane bonds.

Such an inorganic oxide microparticle (primary particle) constituting beaded sol J desirably has an average particle diameter of 5 nm or more but not more than 70 nm, preferably 10 nm or more but not more than 60 nm, and more preferably, 10 nm or more but not more than 50 nm.

When the average particle diameter of the primary particles exceeds 5 nm, adequate scratching resistance and cracking resistance are achieved. Conversely, when the average particle diameter of the primary particles does not exceed 70 nm, good optical characteristics can be achieved.

The average primary particle diameter of the inorganic oxide microparticles constituting beaded sol J can be measured by the BET method or by electron microscopy.

With the BET method, a molecule occupying a known surface area, such as nitrogen gas, is adsorbed onto the surface of the particles, the specific surface area is obtained from the relation of the quantity adsorbed and the pressure, and the specific surface area is converted to a particle diameter using a conversion table to obtain the average primary particle diameter.

With electron microscopy, a beaded sol is scooped from a dispersion (sol) with a copper mesh on which has been formed an amorphous carbon film several tens of nanometers thick, or the beaded sol is adsorbed onto the amorphous carbon film. The microparticles are then observed under a transmission electron microscope to measure the average primary particle diameter.

The average particle diameter of the whole beaded sol (secondary particle) can be obtained by the dynamic light scattering method. The average particle diameter is desirably not less than 20 nm and not more than 200 nm. When the average particle diameter of the secondary particles is 20 nm or more, adequate scratching resistance and cracking resistance can be achieved. Conversely, when the average particle diameter of the secondary particles is 200 nm or less, good optical characteristics can be achieved.

The beaded sol having a structure in which primary particles in the form of inorganic oxide microparticles are linked is commercially available as a liquid sol. Examples are: "Snowtex OUP" ("Snowtex" being a registered trademark), "Snowtex UP," "IPA-ST-UP", "Snowtex PS-M," "Snowtex PS-MO," "Snowtex PS-S," and "Snowtex PS-SO" made by Nissan Chemical Industries, Ltd.; "Fine Cataloid F-120" ("Cataloid" being a registered trademark) made by Shokubai Kasei Kogyo K.K.; and "Quartron PL" ("Quartron" being a registered trademark) made by Fuso Chemical Co., Ltd. These beaded sols have a structure in which primary particles comprised of silicon oxide are three-dimensionally curved.

(1.2 The spherical sol)

Examples of spherical sol K are various microparticles of silicon oxide ($SiO_2$), titanium oxide ($TiO_2$), aluminum oxide ($Al_2O_3$), tin oxide ($SnO_2$), calcium carbonate ($CaCO_3$), barium sulfate ($BaSO_4$), and calcium sulfate ($CaSO_4$). These particles are desirably in the form of colloidal particles. From the perspective of the effect achieved, microparticles comprised of silicon oxide are desirable among these particles. From the perspective of the effect achieved, colloidal silica is preferred. Colloidal silica is commercially available in the form of liquid sols such as "IPA-ST" made by Nissan Chemical Industries, Ltd. and "Ludox AM" ("Ludox" being a registered trademark) made by Grace Corp.

The average particle diameter of spherical sol K is desirably 10 nm or more but less than 30 nm, preferably 10 nm or more and not more than 20 nm. When the average particle diameter is 10 nm or more, adequate scratch resistance can be achieved. Conversely, when the average particle diameter is less than 30 nm, the spherical sol can readily enter into voids within the beaded sol.

The average particle diameter of spherical sol K can be measured by the dynamic scattering method or by electron microscopy.

(1.3 Multifunctional epoxy compounds)

The hard coat layer is normally a cured coating obtained by coating a curable composition for forming a hard coat layer on the surface of an optical substrate or on the surface of another layer provided on the optical substrate, such as a primer, and then subjecting it to a curing treatment such as heating or irradiation with light. The curable composition for forming a hard coat layer can contain a binder component in the form of a curable compound.

The curable compound is desirably a multifunctional epoxy compound from the perspective of obtaining a hard coat layer that is both highly hard and highly transparent. Specific examples of multifunctional epoxy compounds are: 1,6-hexanediol diglycidyl ether, ethylene glycol diglycidyl ether, diethylene glycol diglycidyl ether, triethylene glycol diglycidyl ether, tetraethylene glycol diglycidyl ether, nonethylene glycol diglycidyl ether, propyleneglycol diglycidyl ether, dipropylene glycol diglycidyl ether, tripropylene glycol diglycidyl ether, tetrapropylene glycol diglycidyl ether, nonapropylene glycol diglycidyl ether, neopentyl glycol diglycidyl ether, diglycidyl ether of neopentyl glycol hydroxypivalic acid ester, trimethylol propane diglycidyl ether, trimethylol propane triglycidyl ether, glycerol diglycidyl ether, glycerol triglycidyl ether, diglycerol diglycidyl ether, diglycerol triglycidyl ether, diglycerol tetraglycidyl ether, pentaerythritol triglycidyl ether, pentaerythritol tetraglycidyl ether, dipentaerythritol tetraglycidyl ether, sorbitol tetraglycidyl ether, triglycidyl ether of tris(2-hydroxyethyl)isocyanate, other aliphatic epoxy compounds, isophoronediol diglycidyl ether, bis-2,2-hydroxycyclohexylpropane diglycidyl ether, other alicyclic epoxy compounds, resorcin diglycidyl ether, bisphenol A diglycidyl ether, bisphenol F diglycidyl ether, bisphenol S diglycidyl ether, orthophthalic acid diglycidyl ether, phenol novolak polyglycidyl ether, cresol novolak polyglycidyl ether, other aromatic epoxy compounds, and organic silicon epoxy compounds.

Specific examples of organic silicon epoxy compounds are silane coupling agents containing epoxy groups. Specific examples of silane coupling agents containing epoxy groups are 2-(3,4-epoxycyclohexyl)ethyltrimethoxysilane, 3-glycidoxypropylmethyldimethoxysilane, 3-glycidoxypropyltrimethoxysilane, 3-glycidoxypropylmethyldiethoxysilane, 3-glyxidoxypropyltriethoxysilane, and polymeric multifunctional epoxy silane coupling agents (product names "X-12-981" and "X-12-984" made by Shin-Etsu Chemical Co., Ltd.).

Any of the above multifunctional epoxy compounds can be employed as the curable compound. Two or more compounds can also be mixed for use.

The curable composition for forming a hard coat layer desirably comprises a curing catalyst. Examples of curing catalysts are perchloric acid, ammonium perchlorate, magnesium perchlorate, and other perchlorates; acetylacetonates having central metal atoms such as Cu(II), Zn(II), Co(II), Ni(II), Be(II), Ce(III), Ta(III), Ti(III), Mn(III), La(III), Cr(III), V(III), Co(III), Fe(III), Al(III), Ce(IV), Zr(IV), and V(IV); amines; amino acids such as glycine; Lewis acids, and organic acid metal salts.

Magnesium perchlorate and acetylacetonate catalysts are desirable as curing catalysts. Acetylacetonate catalysts that are complexes of acetylacetonate, and acetylacetonate having iron (Fe) as the central metal (also referred to as "iron acetylacetonate" hereinafter), acetylacetonate having aluminum (Al) as the central metal (also referred to as "aluminum acetylacetonate" hereinafter), and acetylacetonate having manganese (Mn) as the central metal are preferred.

The curable composition can also comprise optional components in the form of hydrolysis catalysts, surfactants, and the like. An example of a hydrolysis catalyst is hydrochloric acid. An example of a surfactant is a silicone surfactant. The curable composition Hc can also contain antistatic agents, UV absorbing agents, and oxidation inhibitors.

When preparing a curable composition containing metal oxide particles and a binder component, it is desirable to mix a sol, in which the metal oxide particles have been dispersed, with the binder component. The curable composition thus obtained can be diluted with a solvent for use as needed. Examples of the solvent employed are alcohols, esters, ketones, ethers, and aromatic solvents. Further, small quantities of metal chelate compounds, surfactants, antistatic agents, UV absorbing agents, oxidation inhibitors, disperse dyes, oil soluble dyes, pigments, photochromic compounds, hindered amines, hindered phenols, and other light and heat-stabilizing agents can be added to the hard coat liquid as needed to improve the coating properties, curing rate, and coating performance following curing of the hard coat liquid.

The hard coat liquid can be coated by the ink-jet method, dipping method, spin-coating method, spray-coating method, roll-coating method, or flow-coating method, followed by curing by heating and drying for several hours at a temperature of 40 to 200°C to form hard coat layer 12. For example, the hard coat liquid can be ultrasonically sprayed onto primer layer 11 formed on lens substrate 10 or onto lens substrate 10 and dried to form hard coat layer 12.

(2. The thickness of the hard coat layer)

The thickness of hard coat layer 12 is desirably greater than 3.5 $\mu$m but not greater than 40 $\mu$m, preferably 4.5 $\mu$m or greater but not greater than 40 $\mu$m, more preferably 9.0 $\mu$m or greater but not greater than 40 $\mu$m, still more preferably 12.0 $\mu$m or greater but not greater than 40 $\mu$m, yet more preferably 15.0 $\mu$m or greater but not greater than 40 $\mu$m, and yet still more preferably, 20 $\mu$m or greater but not greater than 40 $\mu$m.

(The antireflective layer)

By way of example, antireflective layer 13 can be formed by alternately laminating a low-refractive-index layer with a refractive index of 1.3 to 1.5 and a high-refractive-index layer with a refractive index of 1.8 to 2.3 (the drawings show multiple laminated layers as a whole as antireflective layer 13). The number of layers is desirably about five or seven.

Examples of inorganic materials constituting antireflective layer 13 are $SiO_2$, $SiO$, $ZrO_2$, $TiO_2$, $TiO$, $Ti_2O_3$, $Ti_2O_5$, $Al_2O_3$, $TaO_2$, $Ta_2O_5$, $NbO$, $Nb_2O_3$, $NbO_2$, $Nb_2O_5$, $CeO_2$, $MgO$, $Y_2O_3$, $SnO_2$, $MgF_2$, and $WO_3$. These inorganic materials can be employed singly or used in mixtures of two or more. For example, $SiO_2$ can be used as a low-refractive-index layer and $TiO_2$ as a high-refractive-index layer.

Examples of methods of forming such an antireflective layer 13 are the vacuum vapor deposition method, ion-plating method, and sputtering method. In the vacuum vapor deposition method, the ion beam-assisted method of radiating an ion beam simultaneously with vapor deposition can also be employed.

(The antifouling layer)

Antifouling layer 42 is a layer comprised of a fluorine-containing silane compound formed on antireflective layer 13 with the goal of enhancing the water and oil-repelling properties of the surface of an eyeglass lens. An example of the fluorine-containing silane compound is the product named "KY-130" made by Shin-Etsu Chemical Company, Ltd.

(Scratch resistance based on the friction and wear test)

In eyeglass lens 1, the load at which antireflective layer 13 begins to peel off when conducting a friction and wear test exceeds 50 gf. The phrase "antireflective layer 13 begins to peel off" means the state in which peeling-off of at least antireflective layer 13 becomes visible.

The friction and wear test of the present implementation mode is implemented with a variable load-type abrasion tester (Model HHS2000 made by Shinto Kagaku K.K.). Eyeglass lens 1 is set on the table of the tester and a diamond stylus with a tip diameter of 0.03 mm is displaced in a prescribed direction along the curved surface of the lens while keeping it in contact with antifouling layer 14 of eyeglass lens 1.

In the present implementation mode, the scratching rate of the diamond stylus is 0.1 mm/s and the rate of increase in the load on the diamond stylus is 0.15 gf/s (0.15 gf $\fallingdotseq$ 0.001471 N). That is, while the diamond stylus is being pulled at constant speed, the load is increased by 0.15 g each second (0.1 mm). The initial weighting (the weighting at 0 seconds) is desirably greater than 0 g. That is because 0 g is a state of zero weighting in which the behavior of the device is difficult to stabilize. In the present implementation mode, an initial weighting (the weighting at 0 seconds) of 5 gf was employed. It suffices for the initial weighting to be a load that is smaller than the value at which scratching is anticipated. In the present implementation mode, this could have been replaced with 10 gf, 20 gf, or the like, for example.

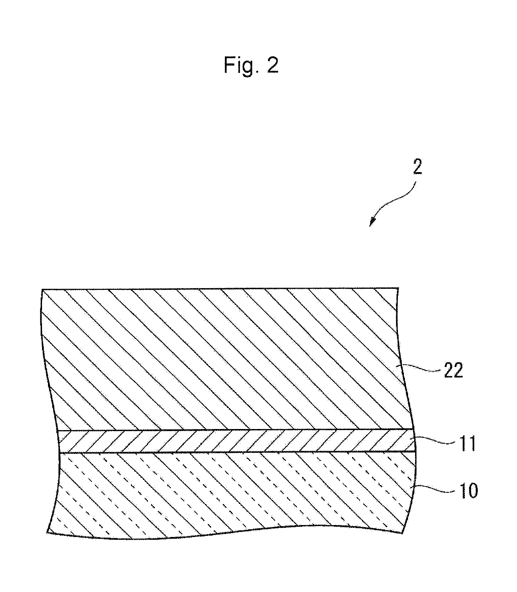

A second implementation mode of the present invention will be described next based on Figure 2.

In the second implementation mode, there is no antireflective layer or antifouling layer; it differs from the first implementation mode in that the surface of the hard coat layer serves as the surface of the lens. In the second implementation mode, the same symbols as in the first implementation mode are used to denote structures that are identical to those in the first implementation mode and the description thereof has been omitted.

Figure 2 shows main part of the eyeglass lens relating to the second implementation mode of the present invention.

In Figure 2, eyeglass lens 2 is comprised of a lens substrate 10 made of plastic, a primer layer 11 provided on the surface of lens substrate 10, and a hard coat layer 22 provided on the surface of primer layer 11. In the second implementation mode, primer layer 11 could be omitted and hard coat layer 22 provided on lens substrate 10.

The materials of lens substrate 10, primer layer 11, and hard coat layer 22 are identical to those of the first implementation mode. The thickness of hard coat layer 22 also falls within a range of 4.5 $\mu$m or greater but not greater than 40 $\mu$m in the same manner as in the first implementation mode.

The scratch resistance of eyeglass lens 2 of the second implementation mode differs from that of the first implementation mode in terms of the friction and wear test. That is, eyeglass lens 2 of the second implementation mode had a weighting at which cutting powder began to appear on the film surface of greater than 70 gf when the friction and wear test was conducted on the surface of hard coat layer 22 under conditions of a scratching rate of 0.1 mm/s and a load increase rate of 0.15 gf/s using a diamond stylus with a tip diameter of 0.03 mm. The initial weighting was identical to that in the first implementation mode.

Here, whether cutting powder had appeared was determined visually. The cutting powder could be produced from just hard coat layer 22, or could accompany those from primer layer 11, other layers, or lens substrate 10.

[Embodiments]

[Embodiment 1]

1. Preparation of hard coat liquid

To a vessel made of stainless steel were charged 46 mass parts of 3-glycidoxypropyltrimethoxysilane (product name TSL8350, made by Momentive Performance Materials Japan, LLC) and 42 weigh parts of 0.05N-HCl. The mixture was thoroughly stirred. Next, 86 mass parts of $SiO_2$ sol (spherical $SiO_2$ sol, product name ST-S, made by Nissan Chemical Industries, Ltd.), 300 ppm of silicone surfactant (product name L7604, made by Dow Corning Toray, Inc.), 0.2 mass part of Fe catalyst, and 0.8 mass part of Al catalyst were added and thoroughly stirred. Methanol (MeOH) was then admixed and stirred to achieve a solid component of 25 mass percent, yielding a hard coat liquid.

2. The lamination process

[1] Lens substrate 10

A lens substrate 10 was procured in the form of a plastic eyeglass lens substrate with a refractive index of 1.67 (product name Seiko Super Sovereign (SSV), made by Hoya Corporation).

Hard coat layer 12

[2] An ultrasonic spray coating system "Exacta Coat" (made by Sono-Tek Corp.) was employed as the spray coating device to adjust the liquid-solid ratio and flow rate of the hard coat liquid prepared above and form coatings on the surfaces of lens substrate 10 (both the concave and convex surfaces) by means of an ultrasonic spray coating method. The coating obtained was baked for 5 hours at 125°C to obtain a hard coat layer 12 with a center film thickness (layer thickness) of 12.0 $\mu$m.

Antireflective layer 13

[3] $SiO_2$ and $TiO_2$ were alternately vapor deposited by the vacuum vapor deposition method on both the object side (convex) surface and eye side (concave) surface of the lens to form antireflective layers 13 each having a total of seven layers.

Antifouling layer 14

[4] A pellet material containing a fluorine-containing silane compound (product name KY-130, made by Shin-Etsu Chemical Co., Ltd.) was employed as a vapor deposition source and heated to about 500°C to vaporize the KY-130, forming an antifouling layer 14 on antireflective layers 13 on both sides of the lens.

(The friction and wear test)

The convex surface of the eyeglass lens 1 fabricated by the above procedure was subjected to a friction and wear test under the following conditions. In the embodiments and comparative examples set forth farther below, the friction and wear test was also conducted in the same manner. As stated above, since films had been formed on both the convex and concave surfaces under identical conditions, the concave surface had the same surface properties.

Tip diameter of diamond stylus: 0.03 mm

Scratching rate of diamond stylus: 0.1 mm/s

Load increase rate of diamond stylus: 0.15 gf/s (0.15 gf ≒ 0.001471 N)

Initial weighting: 5.0 gf

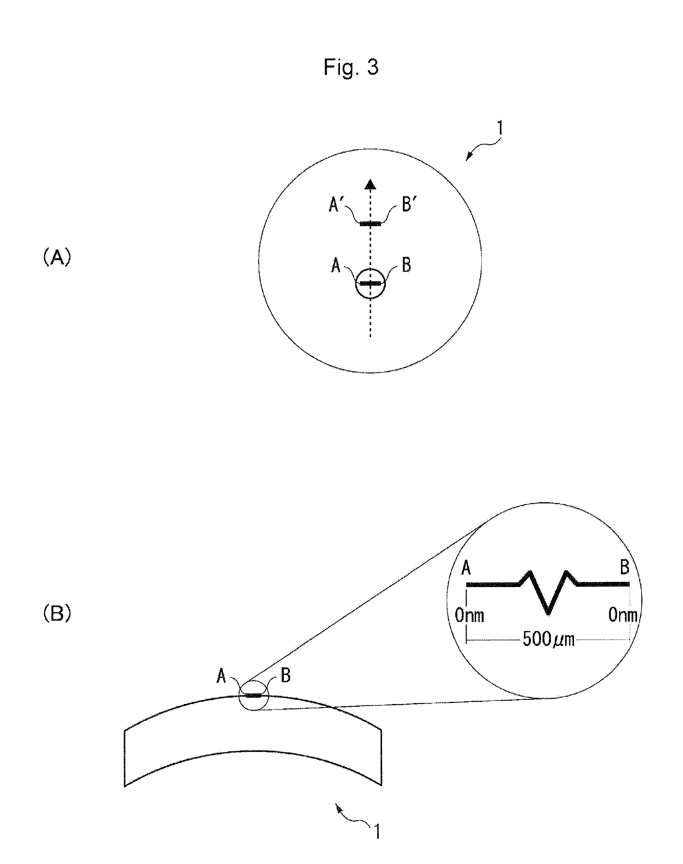

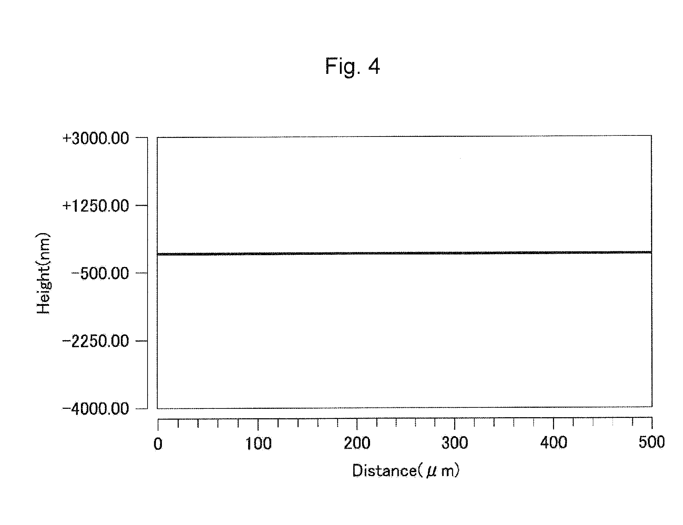

The eyeglass lens 1 with the above layer configuration is set on the table of the tester and the diamond stylus is displaced in a prescribed direction along the curved surface of the lens while keeping it in contact with antifouling layer 14 of eyeglass lens 1.
In the friction and wear test, the load applied to eyeglass lens 1 was increased over time (as the length of the scratching distance increased). In the friction and wear test of Embodiment 1, the sectional shape of the surface of eyeglass lens 1 was measured at different loads. Figures 3(A) and (B) show drawings descriptive of the measurement methods of sectional shapes at certain weightings. Figures 4 to 8 show drawings schematically presenting the measurement results of sectional shapes at different weightings.
Figure 3(A) is a schematic drawing of eyeglass lens 1 as viewed from a direction parallel to the optical axis. The dotted-line arrow shows the displacement path of the diamond stylus in the friction and wear test and the bold lines show spots where the sectional shape of the surface of eyeglass lens 1 was measured. The direction of the arrow is the displacement direction of the diamond stylus, with the weighting increasing in the direction in which the tip of the arrow is pointing.
Figure 3(B) is a sectional view of eyeglass lens 1 perpendicular to the direction of displacement of the diamond stylus at a position where the sectional shape was measured. In Figure 3(B), to the right of eyeglass lens 1, an expanded view shows the spot (bold line) where the sectional shape was measured and the area around it. Point A is the position at which measurement of the sectional shape was begun and point B is the position at which measurement of the sectional shape was ended. The height of point A on the surface of the eyeglass lens is denoted as 0 nm. The height of the surface of eyeglass lens 1 relative to the height of point A was measured at the various points between points A and B so that the line connecting points A and B (the measurement scope) perpendicularly intersected the displacement path of the diamond stylus. The distance between points A and B was 500 μm. The surface of eyeglass lens 1 was curved. The distance over which measurement of the sectional shape was conducted was 500 μm, which was smaller than the size of eyeglass lens 1. Thus, the height of the surface of the eyeglass lens between points A and B was roughly horizontal (0 nm) in a state free of pitting. When measuring the sectional shape of eyeglass lens 1 at different loads, the same measurement was conducted at different positions along the dotted-line arrow. For example, when measuring the sectional shape between points A' and B', it was possible to check for a sectional shape at loads that were greater than when measuring between points A and B.
In Figures 4 to 8, the horizontal axis (distance) denotes the distance (μm) from point A (measurement starting point) in a direction perpendicular to the direction of displacement of the diamond stylus, and the vertical axis (height) denotes the height (displacement) (nm) of the eyeglass lens surface.
In Figure 4, when the load is 16 gf (16 gf ≒ 0.156906 N), the sectional shape of the surface of eyeglass lens 1 is shown (at a position where a load of 16 gf was applied). As shown in Figure 4, no pitting was found in the surface of eyeglass lens 1.

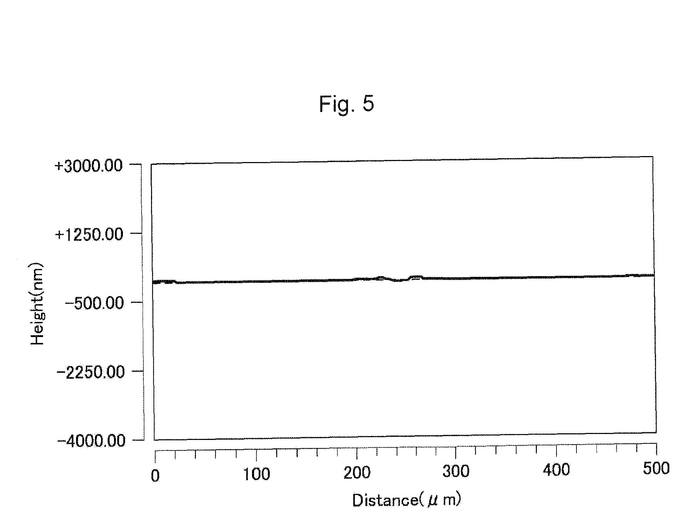

Figure 5 shows the sectional shape of the surface of eyeglass lens 1 when the load was 45 gf (45 gf ≒ 0.441299 N). As shown in Figure 5, slight pitting was found in the surface of eyeglass lens 1. However, no peeling-off of antireflective layer 13 was visible upon visual inspection of the position.

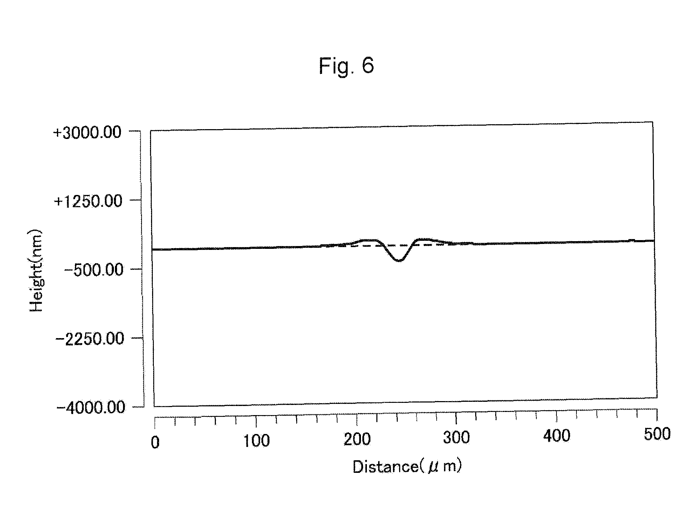

Figure 6 shows the sectional shape of the surface of eyeglass lens 1 when the load was 87 gf (87 gf ≒ 0.853179 N). As shown in Figure 6, the pitting produced in the surface of eyeglass lens 1 was greater than in Figure 5, but because the deforming stress applied to antireflective layer 13 was small, no peeling-off of antireflective layer 13 was visible.

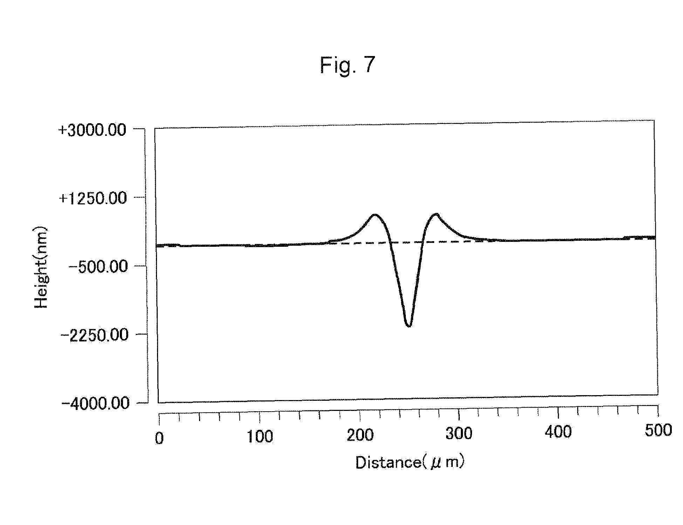

Figure 7 shows the sectional shape of the surface of eyeglass lens 1 when the load was 127 gf (127 gf ≒ 1.24544 N). As shown in Figure 7, the pitting produced in the surface of eyeglass lens 1 became quite large, but no peeling-off of antireflective layer 13 was visible.

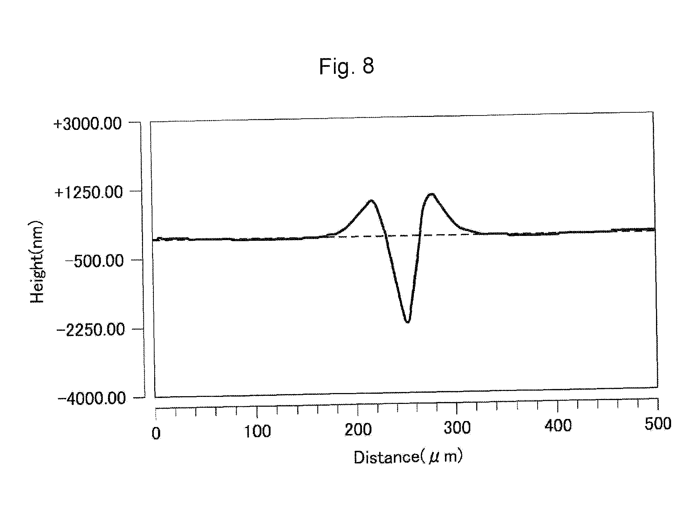

Figure 8 shows the sectional shape of the surface of eyeglass lens 1 when the load was 167 gf. As shown in Figure 8, there was considerable pitting of the surface of eyeglass lens 1. At this position, peeling-off of antireflective layer 13 began to be visible. Thus, peeling-off of antireflective layer 13 was determined to have begun.

That is, the load at which peeling-off of antireflective layer 13 began was 167 gf in Embodiment 1.

[Embodiment 2]

In Embodiment 2, the thickness of hard coat layer 12 and the load at which peeling-off of antireflective layer 13 began in the friction and wear test (the load at which peeling-off began) differed from those in Embodiment 1. The remainder of the configuration was identical.

Thickness of hard coat layer 12: 4.5 $\mu$m

Load at which peeling-off of antireflective layer 13 began: 60 gf (60 gf = 0.588399 N)

Further, in the same manner as in Embodiment 1, in Embodiment 2 as well as in Embodiments 3 through 8 described farther below, the greater the scratching distance in the friction and wear test, the greater the load applied by the diamond stylus to antifouling layer 14. At small loads, there was little pitting of the surface of eyeglass lens 1, but as the load increased, relatively greater pitting of the surface of eyeglass lens 1 occurred (see Figures 4 to 8).

[Embodiment 3]

In Embodiment 3, the thickness of hard coat layer 12 and the load at which peeling-off of antireflective layer 13 began in the friction and wear test differed from those in Embodiment 1. The remainder of the configuration was identical.

Thickness of hard coat layer 12: 5.0 $\mu$m
Load at which peeling-off of antireflective layer 13 began: 80 gf (80 gf = 0.784532 N)

[Embodiment 4]

In Embodiment 4, the thickness of hard coat layer 12 and the load at which peeling-off of antireflective layer 13 began in the friction and wear test differed from those in Embodiment 1. The remainder of the configuration was identical.

Thickness of hard coat layer 12: 9.0 $\mu$m
Load at which peeling-off of antireflective layer 13 began: 100 gf (100 gf ≒ 0.980665 N)

[Embodiment 5]
In Embodiment 5, the thickness of hard coat layer 12 and the load at which peeling-off of antireflective layer 13 began in the friction and wear test differed from those in Embodiment 1. The remainder of the configuration was identical.

Thickness of hard coat layer 12: 10.0 $\mu$m
Load at which peeling-off of antireflective layer 13 began: 130 gf (130 gf = 1.27486 N)

[Embodiment 6]

In Embodiment 6, the thickness of hard coat layer 12 and the load at which peeling-off of antireflective layer 13 began in the friction and wear test differed from those in Embodiment 1. The remainder of the configuration was identical.

Thickness of hard coat layer 12: 15.0 $\mu$m

Load at which peeling-off of antireflective layer 13 began: 170 gf (170 gf ≒ 1.66713 N)

(Steel wool (SW) scratch resistance test)

The convex surfaces in Embodiments 1 to 6 and in Comparative Examples 1 and 2, described farther below, were subjected to a steel wool test based on the following method.

Steel wool (#0000 made by Japan Steel Wool) was employed to apply a load of 1 kg and rubbed back and forth 10 times over the surfaces of the various lenses. Evaluation was conducted by visually determining the closest stage based on rank specimen samples (10 stages). The higher the value, the better the scratch resistance evaluation in the steel wool test. The evaluation was conducted as follows.

Good A: A value of 5 or higher
Passing B: A value of 4 or higher but less than 5
Failing C: A value of less than 4

(Bayer scratch resistance test)

The Bayer test is an example of a scratch resistance test that has been conventionally employed on eyeglass lenses in addition to the steel wool test set forth above. The convex surfaces in Embodiments 1 to 6 and Comparative Examples 1 and 2, described farther below, were subjected to the Bayer test based on the following method.

A Bayer tester (BTE Abrasion Tester) made by Colts Laboratories Corp. was employed to measure how easily the lens surface scratched. The lens samples fabricated above and CR39 (made of allyldiglycolcarbonate, uncoated, with an optical power of 0 diopter, made by SUN-LUX Co., Ltd.) were set in the tester and 500 g of Bayer medium (abrasive, made by Colts Laboratories Corp., 50 pound Bayer medium) was introduced. Six hundred cycles of shaking were conducted at a rate of 150 cycles/minute, and the lens samples and CR39 were removed. The haze value was then measured. The haze value was measured using an automated haze computer (made by Suga Test Instruments Co., Ltd.). Following measurement of the haze value, the following equation was used to calculate the value R (Bayer ratio) of the Bayer test.

$$R = |H_{CR0} - H_{CR1}|/|H_{S0} - H_{S1}|$$

Here, $H_{CR0}$ denotes the haze value of the CR39 prior to the test and $H_{CR1}$ denotes the haze value of the CR39 after the test. $H_{S0}$ denotes the haze value of the lens prior to the test and $H_{S1}$ denotes the haze value of the lens after the test. The evaluation criteria were as follows. A value of about 7 in the haze test is considered to be good, but more stringent conditions were employed here.

Good A: A value R (Bayer ratio) in the Bayer test of 39 or higher
Passing B: An R of not less than 30 but less than 39
Failing C: Less than 30

(Screwdriver scratch test)

A load of 50 gf was applied with a flat-blade screwdriver (blade width: 0.2 mm) made of iron such as is normally employed in mounting eyeglass lenses in frames, a visual check was made for the presence of a scratch when the antifouling surface was scratched in accordance with the friction and wear test set forth above, and evaluation was conducted based on the following scale:

A: No scratching
B: Slight scratching observed, but permissible in a product lens
C: Clear scratching observed, impermissible in a product lens

[Embodiment 7]

In Embodiment 7, the thickness of hard coat layer 12 and the load at which antireflective layer 13 began to peel off in the friction and wear test differed from those in Embodiment 1. The remainder of the configuration was identical.

Thickness of hard coat layer 12: 20.0 $\mu$m
Load at which peeling-off of antireflective layer 13 began: 171 gf (171 gf $\fallingdotseq$ 1.67693 N) or higher

The reason the load at which peeling-off of antireflective layer 13 began was 171 gf or higher was that at loads exceeding this value, deformation of antireflective layer 13 became excessive, precluding correct identification of weighting in the friction and wear test (measurement of the weighting became difficult due to resistance). Deformation of antireflective layer 13 made it impossible to clearly determine the boundary of peeling. This also occurred in Embodiments 8 and 10 described farther below.

[Embodiment 8]

In Embodiment 8, the thickness of hard coat layer 12 and the load at which the antireflective layer began to peel off in the friction and wear test differed from those in Embodiment 1. The remainder of the configuration was identical.

Thickness of hard coat layer 12: 40.0 μm
Load at which peeling-off of antireflective layer 13 began: 171 gf or higher

[Embodiment 9]

In Embodiment 9, the layer structure provided on lens substrate 10, the thickness of hard coat layer 12, and the scratch resistance based on the friction and wear test differed from those in Embodiment 1. The remainder of the configuration was identical.
That is, on a lens substrate 10 identical to that in Embodiment 1, a hard coat liquid prepared in the same manner as in Embodiment 1 was coated to provide a hard coat layer 22. The thickness of the hard coat layer 22 obtained was 6.0 μm.
The eyeglass lens 2 thus obtained and an eyeglass lens 2 obtained in Embodiment 10, described farther below, were subjected to the friction and wear test under the same conditions as in Embodiment 1. That is, a diamond stylus with a tip diameter of 0.03 mm was displaced in a prescribed direction along the curved surface of the lens while keeping the diamond stylus in contact with hard coat layer 22 of eyeglass lens 2 under conditions of a diamond stylus scratching rate of 0.1 mm/s, a diamond stylus load increase rate of 0.15 gf/s, and an initial weighting of 5.0 gf.
For eyeglass lens 2 of Embodiment 9, the load at which the generation of cutting powder from hard coat layer 22 or other layers began in the friction and wear test was 79 gf (79 gf ≒ 0.774725 N).
In the same manner as in Embodiment 1, in both Embodiment 9 and in Embodiment 10, described farther below, the greater the scratching distance in the friction and wear test, the greater the load applied by the diamond stylus to hard coat layer 22. At small loads, the pitting of the surface of eyeglass lens 2 was small, but as the load increased, relatively great pitting was generated on the surface of eyeglass lens 2.

[Embodiment 10]

In Embodiment 10, the thickness of hard coat layer 22 and the load at which the cutting powder began to appear in the friction and wear test differed from Embodiment 9. The rest of the configuration was identical.

Thickness of hard coat layer 22: 10.0 μm
Load at which cutting powder began to appear: 171 g or greater

Embodiments 1 to 10 have been described as not having primer layers. However, the same results can be achieved when a primer layer 11 is provided between lens substrate 10 and hard coat layer 12 or hard coat layer 22.
Primer layer 11 was formed by the following procedure. The other layers and lens substrate 10 were identical to those in Embodiments 1 to 10.

<Preparation of primer liquid>

To a stainless steel vessel were charged 130 mass parts of water, 22 mass parts of ethylene glycol, and 10 mass parts of isopropanol. The mixture was thoroughly stirred, after which 14 mass parts of polyurethane resin (product name SF410, average particle diameter 200 nm, made by Daiichi Kogyo Seiyaku Co., Ltd.) were stirred and admixed.
One mass part each of two acetylene nonionic surfactants (product names Surfynol 104E and Surfynol 465, made by Air Products and Chemicals, Inc.,, Surfynol being a registered trademark) and 0.5 mass part of a polyether-modified siloxane surfactant (product name BYK-348, made by BYK Chemie Japan) were added and stirring of the mixture was continued for an hour. The mixture was then filtered with a 2 μm filter to obtain a primer liquid.

<The lamination process>

The primer liquid obtained was loaded into an ink cartridge for use in an ink-jet printer. The ink cartridge was installed in an ink-jet printer (product name MMP813H, made by Mastermind Corp.) and the primer liquid was coated on lens substrate 10. Next, drying was conducted for 1 hour at 80°C to form a primer layer 11 0.5 $\mu$m in thickness.

In the same manner as in Embodiments 1 to 10, a hard coat layer 12 or a hard coat layer 22 was formed on the surface of primer layer 11.

The friction and wear test can be conducted even when the thickness of hard coat layer 12 exceeds 40 $\mu$m. In that case, the load at which peeling-off of antireflective layer 13 begins can be presumed based on Embodiments 1 to 8 to be 171 gf or greater.

[Comparative Example 1]

In Comparative Example 1, the thickness of hard coat layer 12 and the load at which antireflective layer 13 began to peel off in the friction and wear test differed from Embodiment 1. The remainder of the configuration was identical.

Thickness of hard coat layer 12: 2.0 $\mu$m

Load at which antireflective layer 13 began to peel off: 45 gf (45 gf ≒ 0.441299 N)

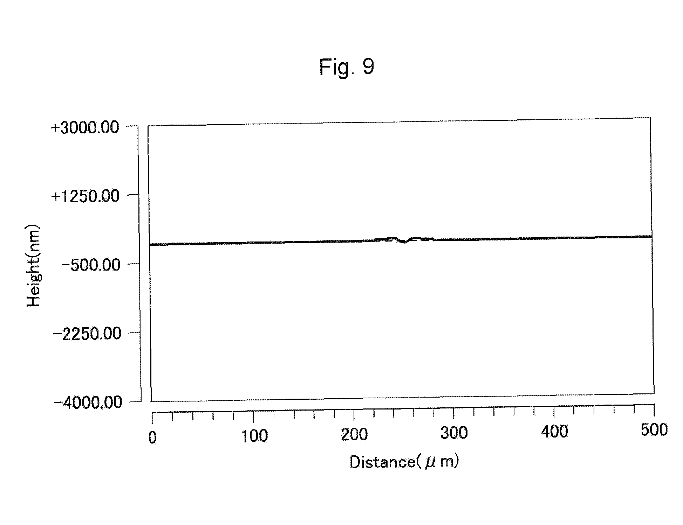

In the same manner as in Embodiment 1, the load applied to the eyeglass lens in the friction and wear test was increased in Comparative Example 1. Figures 9 to 11 show the sectional shapes of the surfaces of the eyeglass lenses at various loads in the friction and wear test of Comparative Example 1.

Figure 9 shows the sectional shape of the surface of the eyeglass lens when the load was 16 gf (16 gf ≒ 0.156906 N). As shown in Figure 9, some pitting was found to have been produced on the surface of the eyeglass lens, but no peeling-off of the antireflective layer could be identified when that position was examined.

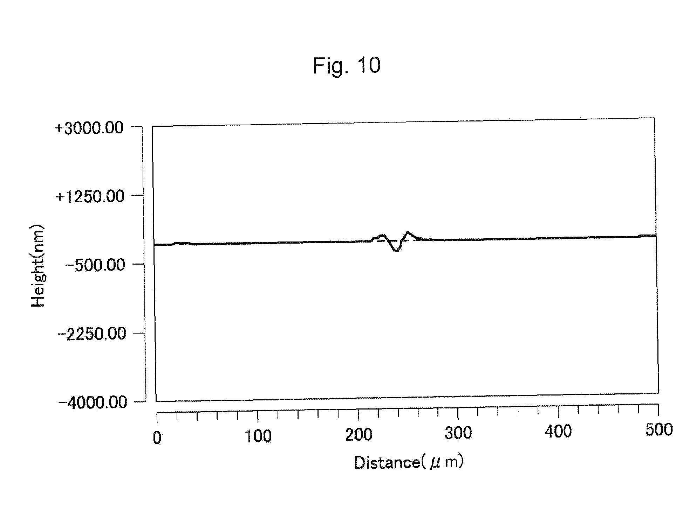

Figure 10 shows the sectional shape of the surface of the eyeglass lens when the load was 26 gf (26 gf ≒ 0.254973 N). As shown in Figure 10, as the pitting increased, the edge of the scratch was found to mound up like an earthen embankment, but no peeling-off of the antireflective layer was visible.

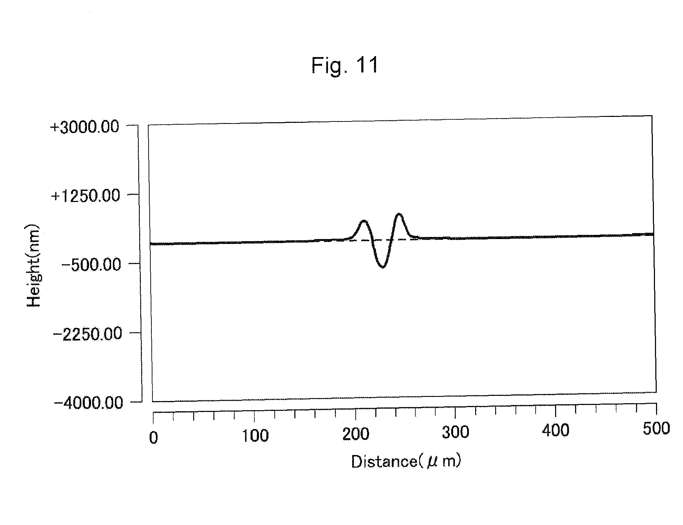

Figure 11 shows the sectional shape of the surface of the eyeglass lens when the load was 45 gf (45 gf ≒ 0.441299 N). As shown in Figure 11, large pits were formed in the surface of the eyeglass lens. Peeling-off of the antireflective layer was visible for the first time at this position.

That is, in Comparative Example 1, the load at which the antireflective layer began to peel off was 45 gf. A comparison of Embodiment 1 and Comparative Example 1 reveals that Embodiment 1, in which the thickness of hard coat layer 12 was 12 $\mu$m, exhibited an ability to withstand more than three-fold the load of Comparative Example 1, in which the thickness of the hard coat layer was 2 $\mu$m.

[Comparative Example 2]

In Comparative Example 2, the thickness of hard coat layer 12 and the load at which antireflective layer 13 began to peel off in the friction and wear test differed from those in Embodiment 1. The remainder of the configuration was identical.

Thickness of hard coat layer 12: 3.5 $\mu$m

Load at which antireflective layer 13 began to peel off: 50 gf (50 gf ≒ 0.490332 N)

In the same manner as in Comparative Example 1, in Comparative Example 2, the greater the scratching distance in the friction and wear test, the greater the load applied by the diamond stylus to the hard coat layer. At small loads, there was little pitting of the surface of the eyeglass lens, but as the load increased, large pits formed in the surface of the eyeglass lens (see Figures 9 to 11).

[Comparative Example 3]

In Comparative Example 3, the thickness of the hard coat layer and the load at which cutting powder began to be produced in the friction and wear test differed from those in Embodiment 9. The remainder of the configuration was identical.

Thickness of hard coat layer: 2.0 µm

Load at which cutting powder began to be produced: 70 gf (70 gf ≒ 0.686465 N)

In the same manner as in Comparative Example 2, in Comparative Example 3, the greater the scratching distance in the friction and wear test, the greater the load applied by the diamond stylus to the hard coat layer. At small loads, there was little pitting of the surface of the eyeglass lens, but as the load increased, large pits formed in the surface of the eyeglass lens.

The results of the above embodiments and comparative examples have been combined into Tables 1 and 2.

[Table 1]

| | Scratch resistance | | | | | |
|---|---|---|---|---|---|---|
| | Load [gf] at which antireflective layer begins to peel off | Screwdriver scratch test | Steel wool test | | Bayer test | |
| | | | Stage value | Evaluation | R value | Evaluation |
| Embodiment 1 | 167 | A | 6 | A | 50 | A |
| Embodiment 2 | 60 | B | 6 | A | 50 | A |
| Embodiment 3 | 80 | B | 6 | A | 50 | A |
| Embodiment 4 | 100 | A | 6 | A | 50 | A |
| Embodiment 5 | 130 | A | 6 | A | 50 | A |
| Embodiment 6 | 170 | A | 6 | A | 50 | A |
| Embodiment 7 | 171 or greater | A | 6 | A | 50 | A |
| Embodiment 8 | 171 or greater | A | 6 | A | 50 | A |
| Comp. Ex. 1 | 45 | C | 6 | A | 50 | A |
| Comp Ex. 2 | 50 | C | 6 | A | 50 | A |

[Table 2]

| | Thickness of hard coat layer | Antireflective layer and antifouling layer | Load at which cutting powder began to appear |
|---|---|---|---|
| Embodiment 9 | 6.0 µm | Absent | 79 gf |
| Embodiment 10 | 10.0 µm | Absent | 171 gf or greater |
| Comp. Ex. 3 | 2.0 µm | Absent | 70 gf |

As shown in Table 1, Embodiments 1 to 8 and Comparative Examples 1 and 2 presented identical evaluation results for the steel wool test and Bayer test. However, it will be understood from the screwdriver scratch test results that Comparative Examples 1 and 2 exhibited scratch resistance that was inferior to that of the embodiments for scratches that could be produced during framing of eyeglass lenses. Accordingly, if product lenses were to be shipped based on evaluation by just the conventional above-described scratch resistance tests, it would be difficult to eliminate defective lenses in the form of eyeglass lenses tending to develop scratches during eyeglass processing and the like.

By contrast, when the surfaces of the antifouling layers 14 of Comparative Examples 1 and 2 were subjected to a friction and wear test with a diamond stylus having a tip diameter of 0.03 mm at a scratching rate of 0.1 mm/s and a load increase rate of 0.15 gf/s, they exhibited loads at which antireflective layer 13 began to peel off of 45 gf and above and 50 gf and lower, respectively. In comparison, Embodiments 1 to 8 exhibited higher values of 60 gf and above. Due to the good screwdriver scratch test results of Embodiments 1 to 8, it can be said that an eyeglass lens exhibiting a load at which the antireflective layer begins to peel off of 50 gf or higher in the above friction and wear test affords high scratch resistance to various scratches as well as extremely good durability.

An eyeglass lens obtained in the same manner as in Embodiment 1 with the exception that the spherical $SiO_2$ sol employed in Embodiment 1 was replaced with a 1:1 ratio mixture of spherical $SiO_2$ sol (MA-ST, solid component 20.0 mass%, made by Nissan Chemical Industries, Ltd.) and chained SiO$_2$ sol (MA-ST-UP, solid component 20.0 mass%, made by Nissan Chemical Industries, Ltd.) was evaluated in the same manner as above. As a result, it exhibited a load at which the antireflective layer began to peel off in the friction and wear test of 108 gf. Other evaluation results were identical to those of Embodiment 1.

The higher the load at which antireflective layer 13 begins to peel off, the better the resistance to scratching relative to scratches received at great pressure. Thus, in an eyeglass lens equipped with a hard coat layer 12, an antireflective layer 13, and an antifouling layer 14, a load at which antireflective layer 13 begins to peel off of 80 gf or greater is desirable, 100 gf or greater is preferable, 130 gf or greater is more preferable, and 167 gf or greater is still more preferable.

As shown in Table 2, a comparison of Comparative Example 3 and Embodiments 9 and 10 reveals that when a friction and wear test was conducted on the surface of hard coat layer 22 with a diamond stylus with a tip diameter 0.03 mm in diameter at a scratching rate of 0.1 mm/s and a load increase rate of 0.15 gf/s, the load at which cutting powder began to appear was 70 gf for Comparative Example 3. By contrast, it was greater, at 79 fg or higher, for Embodiments 9 and 10. Accordingly, the eyeglass lenses 2 of Embodiments 9 and 10 were less prone to scratch at higher pressures and afforded better scratch resistance than the eyeglass lens of Comparative Example 3.

Comparing Embodiment 9, which had a hard coat layer 22 with a thickness of 6.0 μm, to Embodiment 10, which had a hard coat layer 22 with a thickness of 10.0 μm, the load at which cutting powder began to be produced was 79 gf in Embodiment 9 and higher, at 171 gf, in Embodiment 10. Accordingly, in an eyeglass lens 2 equipped with a hard coat layer 22 but not with an antireflective layer 13 or an antifouling layer 14, a hard coat layer 22 with a thickness of 10.0 μm or greater is preferable.

It is also possible to provide an eyeglass lens with excellent scratch resistance by employing lens substrate 10 as a plastic eyeglass lens.

The present invention is not limited to the implementation modes set forth above, and covers the following modifications to the extent that they achieve the object of the present invention.

In the above implementation modes, an optical article in the form of a plastic eyeglass lens has been described. However, the present invention can be applied to other optical articles. For example, it can be applied to optical lenses such as camera lenses, telescope lenses, microscope lenses, and stepper-use condenser lenses.

[Key to the Numbers]

1, 2: Eyeglass lenses; 10: lens substrate; 11: primer layer; 12, 22: hard coat layers; 13: antireflective layer; 14: antifouling layer.

## Claims

1. An optical article comprising:

    an optical substrate;
    a hard coat layer provided directly, or over another layer(s), on the optical substrate;
    an antireflective layer provided on the hard coat layer; and
    an antifouling layer provided on the antireflective layer;
    such that when a friction and wear test is conducted on the surface of the antifouling layer under conditions of a scratching rate of 0.1 mm/s and a load increase rate of 0.15 gf/s with a diamond stylus having a tip diameter of 0.03 mm, the load at which the antireflective layer begins to peel off is greater than 50 gf.

2. The optical article according to claim 1, wherein the optical article is an eyeglass lens.

3. The optical article according to claim 1 or 2, wherein the hard coat layer comprises a filler component selected from the group consisting of spherical inorganic oxide particles and chained inorganic oxide particles.

4. The optical article according to claim 3, wherein the content of the filler component in the hard coat layer ranges from more than 20 mass% to less than 40 mass%.

5. The optical article according to any one of claims 1 to 4, wherein the thickness of the hard coat layer is greater than 3.5 μm but equal to or smaller than 40 μm.

6. The optical article according to any one of claims 1 to 5, wherein the thickness of the hard coat layer is equal to or greater than 9.0 μm but equal to or smaller than 40 μm.

7.  The optical article according to any one of claims 1 to 6, wherein the thickness of the hard coat layer is equal to or greater than 12.0 μm but equal to or smaller than 40 μm.

8.  The optical article according to any one of claims 1 to 7, wherein the thickness of the hard coat layer is greater than 15.0 μm but equal to or smaller than 40 μm.

9.  The optical article according to any one of claims 1 to 8, wherein the load at which the antireflective layer begins to peel off is equal to or greater than 100 gf.

10. The optical article according to any one of claims 1 to 9, wherein the load at which the antireflective layer begins to peel off is equal to or greater than 167 gf.

11. An optical article comprising:

    an optical substrate; and
    a hard coat layer provided directly, or over another layer(s), on the optical substrate;
    such that when the friction and wear test is conducted on the surface of the hard coat layer under conditions of a scratching rate of 0.1 mm/s and a load increase rate of 0.15 gf/s with a diamond stylus having a tip diameter of 0.03 mm, the load at which cutting powder appears is equal to or greater than 70 gf.

12. The optical article according to claim 11, wherein the optical article is an eyeglass lens.

13. The optical article according to claim 11 or 12, wherein the thickness of the hard coat layer is equal to or greater than 6.0 μm but equal to or smaller than 40 μm.

Fig. 1

Fig. 2

2

22

11

10

Fig. 3

(A)

(B)

A          B
0nm ⌐          ⌐ 0nm
    └ 500μm ┘

Fig. 4

Fig. 5

Fig. 6

Fig. 7

Fig. 8

Fig. 9

Fig. 10

Fig. 11

Fig. 12

Fig. 13

Fig. 14

## INTERNATIONAL SEARCH REPORT

| International application No. |
| --- |
| PCT/JP2013/073589 |

A. CLASSIFICATION OF SUBJECT MATTER
*G02B1/11*(2006.01)i, *B32B7/02*(2006.01)i, *B32B9/00*(2006.01)i

According to International Patent Classification (IPC) or to both national classification and IPC

B. FIELDS SEARCHED

Minimum documentation searched (classification system followed by classification symbols)
G02B1/11, B32B7/02, B32B9/00

Documentation searched other than minimum documentation to the extent that such documents are included in the fields searched
Jitsuyo Shinan Koho          1922–1996     Jitsuyo Shinan Toroku Koho     1996–2013
Kokai Jitsuyo Shinan Koho     1971–2013     Toroku Jitsuyo Shinan Koho     1994–2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | WO 2007/026529 A1  (JGC Catalysts and Chemicals Ltd.), 08 March 2007 (08.03.2007), paragraphs [0092] to [0104] & JP 5215665 B          & US 2009/0136746 A1 & EP 1925631 A1          & CN 101253224 A & AU 2006286016 A        & KR 10-2008-0031754 A | 1-13 |
| A | JP 2010-235783 A  (DIC Corp.), 21 October 2010 (21.10.2010), paragraphs [0021] to [0022], [0112] to [0133] (Family: none) | 1-13 |
| A | JP 10-135206 A  (Suzuki Motor Corp.), 22 May 1998 (22.05.1998), paragraph [0017] (Family: none) | 1-13 |

☒  Further documents are listed in the continuation of Box C.          ☐  See patent family annex.

| | |
| --- | --- |
| *      Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |
| Date of the actual completion of the international search<br>    25 September, 2013 (25.09.13) | Date of mailing of the international search report<br>    08 October, 2013 (08.10.13) |
| Name and mailing address of the ISA/<br>    Japanese Patent Office | Authorized officer |
| Facsimile No. | Telephone No. |

Form PCT/ISA/210 (second sheet) (July 2009)

## INTERNATIONAL SEARCH REPORT

International application No.

PCT/JP2013/073589

C (Continuation).    DOCUMENTS CONSIDERED TO BE RELEVANT

| Category* | Citation of document, with indication, where appropriate, of the relevant passages | Relevant to claim No. |
|---|---|---|
| A | JP 11-302832 A  (Kobe Steel, Ltd.), 02 November 1999 (02.11.1999), entire text (Family: none) | 1-13 |

Form PCT/ISA/210 (continuation of second sheet) (July 2009)

## INTERNATIONAL SEARCH REPORT

| International application No. |
| --- |
| PCT/JP2013/073589 |

Claim 1 includes all of optical articles each of which comprises an optical base, a hard coat layer, an antireflective layer and a stain-proof layer and has a desired property "the load at which the antireflective layer begins to be delaminated is larger than 50 gf when a friction/abrasion test is carried out on the surface of the stain-proof layer under the conditions of a scratching rate of 0.1 mm/sec and a load increasing rate of 0.15 gf/sec using a diamond needle having a tip diameter of 0.03 mm", and claim 11 includes all of optical articles each of which comprises an optical base and a hard coat layer and has a desired property "the load at which grinding swarf begins to appear is larger than 70 gf when a friction/abrasion test is carried out on the surface of the hard coat layer under the conditions of a scratching rate of 0.1 mm/sec and a load increasing rate of 0.15 gf/sec using a diamond needle having a tip diameter of 0.03 mm". However, those optical articles which are disclosed in the meaning within PCT Article 5 are only optical articles each of which is equipped with a hard coat layer having a property "a hard coat layer which is produced by applying a hard coat solution onto the surface of a plastic lens base by an ultrasonic spray coating method to form a coating film and then burning the coating film at 125°C for 5 hours and has a thickness of 4.5 μm or more, wherein the hard coat solution is prepared by introducing 46 parts by mass of 3-glycidoxypropyltrimethoxysilane and 42 parts by mass of 0.05 N-HCl, agitating the resultant mixture, further introducing 86 parts by mass of spherical $SiO_2$, 300 ppm of a silicone-based surfactant, 0.2 part by mass of an Fe-containing catalyst and 0.8 part by mass of an Al-containing catalyst thereto, agitating the resultant mixture, and then mixing methanol (MeOH) with the mixture and then agitating the resultant mixture so that the solid content in the mixture becomes 25 mass%", which is described in the description. Therefore, these claims are not supported in the meaning within PCT Article 6.

Such being the case, the search was carried out on the scopes which are supported by and disclosed in the description, i.e., "an optical article which comprises an optical base, a hard coat layer arranged on the optical base directly or with another layer being intercalated therebetween, an antireflective layer arranged on the hard coat layer and a stain-proof layer arranged on the antireflective layer, wherein the hard coat layer is produced by applying a hard coat solution onto the surface of a plastic lens base by an ultrasonic spray coating method to form a coating film and then burning the coating film at 125°C for 5 hours and has a thickness of 4.5 μm or more, and wherein the hard coat solution is prepared by introducing 46 parts by mass of 3-glycidoxypropyltrimethoxysilane and 42 parts by mass of 0.05 N-HCl, agitating the resultant mixture, further introducing 86 parts by mass of spherical $SiO_2$, 300 ppm of a silicone-based surfactant, 0.2 part by mass of an Fe-containing catalyst and 0.8 part by mass of an Al-containing catalyst thereto, agitating the resultant mixture, and then mixing methanol (MeOH) with the mixture and then agitating the resultant mixture so that the solid content in the mixture becomes 25 mass%", which is described in the description specifically, with respect to claim 1, and

(Continued to next extra sheet)

**INTERNATIONAL SEARCH REPORT**

International application No.

PCT/JP2013/073589

"an optical article which comprises an optical base and a hard coat layer arranged on the optical base directly or with another layer being intercalated therebetween, wherein the hard coat layer is produced by applying a hard coat solution onto the surface of a plastic lens base by an ultrasonic spray coating method to form a coating film and then burning the coating film at 125°C for 5 hours and has a thickness of 4.5 μm or more, and wherein the hard coat solution is prepared by introducing 46 parts by mass of 3-glycidoxypropyltrimethoxysilane and 42 parts by mass of 0.05 N-HCl, agitating the resultant mixture, further introducing 86 parts by mass of spherical $SiO_2$, 300 ppm of a silicone-based surfactant, 0.2 part by mass of an Fe-containing catalyst and 0.8 part by mass of an Al-containing catalyst thereto, agitating the resultant mixture, and then mixing methanol (MeOH) with the mixture and then agitating the resultant mixture so that the solid content in the mixture becomes 25 mass%", which is also described in the description specifically, with respect to claim 11.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012191538 A

- JP 2007248998 A